(19) Europäisches Patentamt

European Patent Office

Office européen des brevets

(11) Veröffentlichungsnummer: **0 406 650 A2**

# (12) EUROPÄISCHE PATENTANMELDUNG

(21) Anmeldenummer: 90111958.6

(22) Anmeldetag: 23.06.90

(51) Int. Cl.⁵: **A23L 3/40, A23P 1/14,**
**A23P 1/06**

(30) Priorität: 03.07.89 CH 2464/89

(43) Veröffentlichungstag der Anmeldung:
09.01.91 Patentblatt 91/02

(84) Benannte Vertragsstaaten:
**DE FR GB IT NL SE**

(71) Anmelder: **Zwag Zschokke Wartmann AG**
**Conradin Zschokke-Strasse**
**CH-5312 Döttingen(CH)**

(72) Erfinder: **Aigeldinger, Jean-Claude**
**Nussbaumweg 3**
**CH-5244 Birrhard(CH)**

(74) Vertreter: **Blum, Rudolf Emil Ernst et al**
**c/o E. Blum & Co Patentanwälte Vorderberg**
**11 11**
**CH-8044 Zürich(CH)**

(54) Verfahren und Vorrichtung zum Verarbeiten von pastösem Gut im Vakuum.

㊐ Zum kontinuierlichen Trocknen von nass verarbeitetem, pastösem Gut wird dieses über einen Extruder (1) in eine Unterdruckzone gefördert, welche z.B. durch einen Vakuumbandtrockner (10) gebildet sein kann. Die durch die Extrusion erfolgende Erwärmung des Guts führt zu einer raschen Expansion und Trocknung im Vakuum. Die Zufuhr von zusätzlicher Wärme ist je nach Produkt nicht mehr erforderlich. Damit lässt sich die Verweilzeit des Guts im Vakuum herabsetzen, womit der Produkteausstoss vergrössert werden kann. Ferner kann mit tieferen Temperaturen gearbeitet werden, wodurch die Qualität des Guts nicht beeinträchtigt wird.

Fig.1

# VERFAHREN UND VORRICHTUNG ZUM VERARBEITEN VON PASTÖSEM GUT IM VAKUUM

Die Erfindung betrifft ein Verfahren zum kontinuierlichen Verarbeiten von pastösem Gut im Vakuum, sowie Vorrichtungen zur Durchführung dieses Verfahrens.

Insbesondere im Bereich der Lebensmittelherstellung ist es bekannt, Komponenten nass zu verarbeiten und zu konditionieren. Soll das Gut schliesslich in Trockenform gebracht werden, wie dies z.B. bei Frühstücksgetränkepulver, Apéritifgebäck, Suppenpulver etc. der Fall ist, muss das Gut vor dem Verpacken getrocknet werden. Dazu ist bekannt, das Gut in noch pumpbarer Form, d.h. mit einem Feuchteanteil von 15 - 20 % Wassergehalt, in einen Vakuumbandtrockner zu fördern und ihm dort die Feuchtigkeit unter Erwärmung zu entziehen. Das Gut wird auf einem Förderband kontinuierlich durch die Vakuumkammer geführt und dabei durch Kontakt- oder Strahlungsheizung erwärmt. Vor allem bei Produkten, die bei Wasserentzug im Vakuum expandieren, ist für ausreichenden Wasserentzug eine relativ lange Verweilzeit im Vakuum nötig. Dies führt zu einem relativ geringen Produktionsausstoss der entsprechenden Vakuumbandtrockner. Ferner wird das Totalgewicht des Trockners mit dem Gut relativ gross, was insbesondere im Zusammenhang mit der Schwerkraft-Ausschleusung des Guts ungünstig ist, da der Trockner auf einem erhöhten Niveau angeordnet sein muss.

Ausgehend von dem bekannten Verfahren der Vakuumbandtrocknung (vgl. z.B. US-PS- 4 574 495 oder US-PS 4 640 020) stellt sich die Aufgabe, das Verfahren so zu verbessern, dass die Verweilzeit im Vakuumbandtrockner herabgesetzt werden kann, möglichst auch unter Herabsetzung der Behandlungstemperatur und dass als Folge davon entweder der Ausstoss vergrössert oder die Maschinengrösse vermindert werden kann. Ueberraschenderweise gelingt dies dadurch, dass das Gut unter Erwärmung in einem Extruder in eine Unterdruckzone gefördert wird. Ueber den Extruder wird für die meisten Fälle dem zu verarbeitenden Produkt genügend latente Wärme schon vor der Vakuumbehandlung zugeführt, um danach im Vakuum die gewünschte Wirkung (wie z.B. Trocknen, Expandieren des Produkts, Schmelze, Kühlung etc) ohne oder mit erheblich geringerer Wärmeeinwirkung im Vakuum zu erzielen. Da das Produkt bereits beim Eintreten vom Extruder ins Vakuum erwärmt ist, findet bei expandierenden Produkten eine frühere und stärkere Expansion statt, was das Trocknen beschleunigt. Es wird ferner die Verweilzeit im Vakuum eingespart, welche der Erwärmungszeit des Produkts im Vakuum entspräche. Demzufolge kann im Vakuumbandtrockner auch mit tieferen Temperaturen gearbeitet werden, was die Produkteeigenschaften (Geschmack, Löslichkeit) in vielen Fällen günstig beeinflusst.

Weitere Vorteile und Eigenschaften der Erfindung ergeben sich aus der detaillierten Beschreibung einiger Ausführungsbeispiele der Erfindung anhand der Zeichnungen. Darin zeigen:

Fig. 1 eine erste Ausführung der Erfindung in schematischer Darstellung;

Fig. 2 eine mögliche Abwandlung der Ausführung gemäss Fig. 1;

Fig. 3 eine zweite Ausführung der Erfindung in schematischer Darstellung;

Fig. 4 und 5 Spezialdüsen einer Granuliervorrichtung gemäss Fig. 3 im Schnitt;

Fig. 6 und 7 zwei Ausführungen mit Transportband zur Ueberbrückung der Höhendifferenz zwischen Extruder und Vakuumbandtrockner, und

Fig. 8 eine dritte Ausführung der Erfindung in schematischer Darstellung.

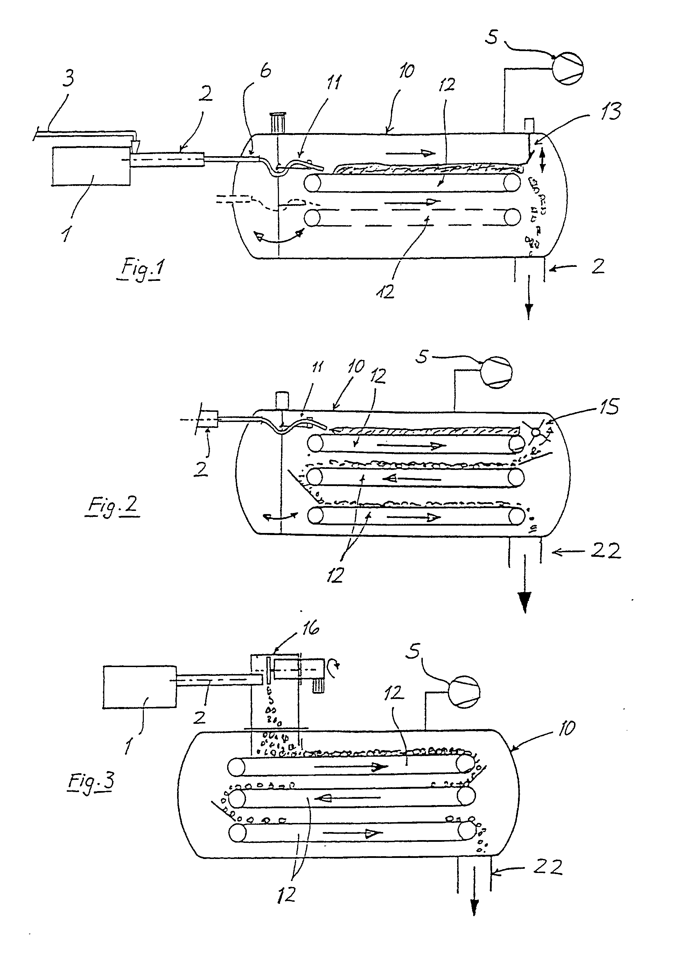

Anhand von Fig. 1 sollen zunächst die Grundelemente der Erfindung erläutert werden.

In Fig. 1 bloss schematisch angedeutet ist ein Extruder 1 an sich bekannter Bauart, wie er zum Mischen, Homogenisieren, Dispersieren etc. von Materialien an sich bekannt ist. Als Extruder sind z.B. der Typ ZSK 30 der Firma Werner & Pfleiderer oder entsprechende Maschinen einsetzbar. Der Extruder 1 weist eine Schnecke (bzw. Doppelschnecke) 2 auf, mittels welcher das Gut gefördert wird, welches über Zufuhrleitungen 3 zugeführt wird. Das Gut kann durch diese Art der Förderung von vornehrein mit einem wesentlich geringeren Wasseranteil von z.B. 4 bis 6 % verarbeitet werden. Während es die Schnecke 2 durchläuft, wird es durch die mechanische Beanspruchung erwärmt, so dass es am Ende der Schnecke erwärmt und unter Druck aus einer Düse (nicht gezeigt) austritt. Diese Ausgestaltung der Düse bestimmt je nach zu verarbeitendem Material die Form des austretenden Strangs, der unmittelbar in einen evakuierten Bereich austritt. Der evakuierte Bereich kann, wie insbesondere in den Ausführungsbeispielen der Fig. 1 bis 3 gezeigt, ein Vakuumbandtrockner 10 sein.

Solche Vakuumbandtrockner sind ebenfalls bereits bekannt und in verschiedenen Typen bei der Anmelderin erhältlich. Sie besitzen zur Vakuumbehandlung des Guts eine Vakuumpumpe 5 sowie wahlweise Vorrichtungen für die zusätzliche Wärmeeinwirkung auf das Gut von aussen mittels Beheizung bzw. Kühlung durch Kontaktheizflächen, Mikrowellen- oder Strahlungsheizung (nicht gezeigt). Allerdings wird gemäss der Erfindung für die meisten Fälle durch den Extruder 1 dem Produkt genügend latente Wärme zugeführt, um die gewünschten Wirkungen im nachfolgenden Vakuum zu erzielen (wie z.B. Trocknung, Expansion, Schmelzenkühlung etc.), so dass die zeitaufwendige Beheizung von aussen im Vakuum entfallen oder erheblich reduziert werden kann.

Die einfachste Ausführung der Erfindung besitzt, wie in Fig. 1 dargestellt, einen Extruder 1, dessen Extrudat über eine Verbindungsleitung 6 in einem herkömmlichen Vakuumbandtrockner 10 ins Vakuum austritt. Dieser Vakuumbandtrockner besitzt eine Vorrichtung 11 zur Schwenkbeschickung eines Transportbands 12, mit welchem der extrudierte Strang auf das Band mäanderartig verteilt wird. Unmittelbar beim Austritt ins Vakuum expandiert das Gut unter dem Einfluss des unter erhöhter Eigentemperatur des Guts und geringem Umgebungsdruck verdampfenden Wasseranteils sogleich. Die Trocknung und Kühlung kann damit bei gewissen Produkten ohne zusätzliche äussere Wärme- bzw. Kältezufuhr im Vakuumbandtrockner erfolgen. Der kurzen Verweilzeit entsprechend kann das Transportband 12 mit erhöhter Geschwindigkeit betrieben werden. Am Ende des Transportbands 12 kann das immer noch in einem Strang zusammenhängende Gut mittels einer Brechvorrichtung 13 vom Band gelöst, gebrochen und nach unten ausgeschleust werden. Wie in Fig. 1 angedeutet, können mehrere Transportbänder 12 im Parallelbetrieb vorgesehen sein.

Als Abwandlung kann gemäss Fig. 2 vorgesehen sein, das angetrocknete Gut am Ende des ersten Transportbands 12 in einer Granuliervorrichtung 15 so zu zerkleinern, dass es als rieselfähiges Produkt auf ein darunterliegendes Band 12 fällt etc. Die Anzahl der Bänder 12, die im Gegensatz zu Fig. 1 abwechselnd vor und zurück laufen, hängt von der gesamten Verweilzeit des Produkts sowie der zu produzierenden Menge im Vakuumbandtrockner ab. Da das Gut schon nach kurzer Verweilzeit ausreichend angetrocknet ist, kann es im beschriebenen Fall nach einer Bandlänge granuliert werden, wodurch sich der Trocknungseffekt wegen der vergrösserten Oberfläche nochmals erhöhen lässt. Insbesondere in granuliertem Zustand kann nötigenfalls eine zusätzliche Erwärmung von aussen wirksam erfolgen.

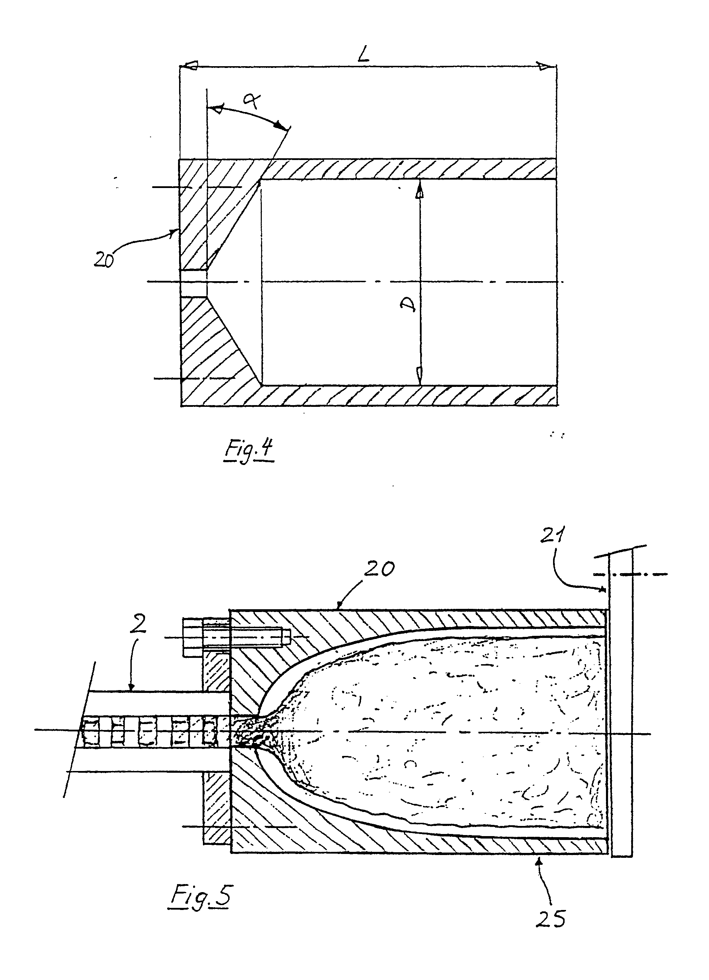

Wie bereits angedeutet, stellt es einen der Vorteile des erfindungsgemässen Verfahrens dar, dass das Gut kurz nach dem Austritt aus dem Extruder bereits expandiert und an seiner Oberfläche rasch trocknet. Das Extrudat klebt an seiner Oberfläche schon kurz nach dem Austritt aus dem Extruder nicht mehr und lässt sich schneiden. Es wird damit möglich, das extrudierte Gut im Vakuum unmittelbar nach dem Austritt aus dem Extruder oder nach erfolgter Expansion in einer noch zu beschriebenden Spezialdüse (Fig. 4,5) in kleinere Teile von 1 mm bis 150 mm zu granulieren. Diese Vorbehandlung gestattet es insbesondere, die Verweilzeit zu verkürzen. In Fig. 3 ist eine derartige Ausführung dargestellt. Das Extrudat wird dabei direkt am Austritt des Extruders unter Vakuum mittels einem rotierenden Messer 16 granuliert, bevor es auf das Transportband 12 fällt. Da das Granulat aus den genannten Gründen bereits beim Auftreffen auf dem Band nicht mehr aneinander klebt, kann es ohne weitere mechanische Bearbeitung längs einem oder mehreren Transportbändern 12 den Vakuumbandtrockner 10 durchqueren. In der bereits anfänglich granulierten Form findet natürlich die Trocknung entsprechend wirksamer bzw. unter Einsatz geringer Temperaturen statt.

In den Fig. 4 und 5 sind die erwähnten Spezialdüsen im Schnitt dargestellt, welche es erlauben, das Gut nach der Expansion im Vakuum zu schneiden. Nach dem eigentlichen Extrudierteil 2 kann für bestimmte, stark expandierende Produkte eine Düse bzw. Expansionskammer 20 angeordnet werden, die es erlaubt, dass das Produkt expandiert, bevor es geschnitten oder granuliert wird. Die Düse 20 muss dem Expansionsprofil des jeweiligen Produkts angepasst sein und kann beispielsweise einen Oeffnungswinkel zwischen 0 und 50 Grad eine Länge L zwischen 20 und 500 mm sowie einen Durchmesser D zwischen 10 und 200 mm besitzen (Fig. 4). Unmittelbar am Ende der Düse 20 ist eine Schneideinrichtung 21 vorgesehen, mittels welcher jeweils pro Umdrehung, eine Schicht des Guts abgetrennt wird. Die Relation von Vorschubgeschwindigkeit des expandierten Strangs und Umdrehungszahl des Messers 21 bestimmt die Dicke der abgeschnittenen Stücke. Die Profilform des Strangs ist durch die Form der Austrittsöffnung aus dem Extrudierteil 2 bestimmt. Es können mit dieser Düse den einzelnen Stücken, z.B. für die Herstellung von sog. Snacks, bestimmte Formen gegeben werden. Die Fallstrecke von der Schneideinrichtung zum Transportband reicht in der Regel wegen der bereits vorhandenen latenten Wärme im Produkt aus, die einzelnen Stücke auch an der Schnittfläche zu trocknen, so dass sie formstabil sind und nicht aneinander kleben.

Zur Entnahme des getrockneten Guts aus Vakuumbandtrocknern ist in der Regel eine Schwerkraft-Ausschleusvorrichtung 22, eventuell mit pneumatischem Transport vorgesehen, welche in den Figuren nur schematisch angedeutet ist. Solche Ausschleusvorrichtungen 22 bedingen eine erhöhte Lage des Vakuumbandtrockners gegenüber dem Boden, was wiederum eine entsprechend erhöhte Lage des Extruders nach sich zieht. Da das Maschinengewicht des Extruders erheblich ist, ist die erhöhte Aufstellung aufwendig.

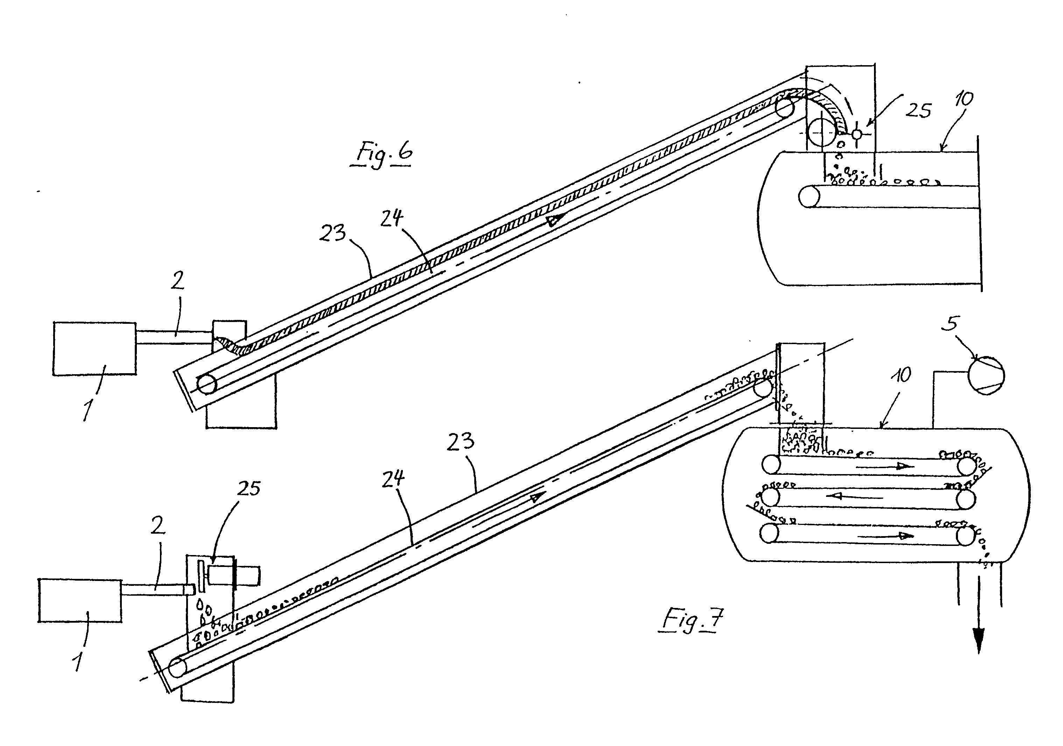

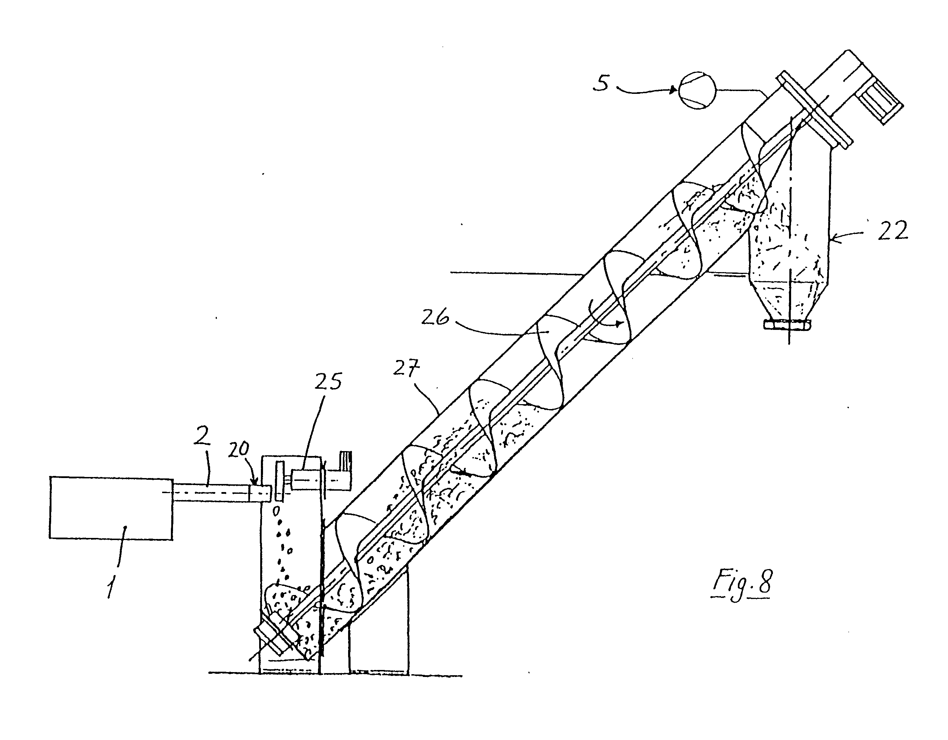

Gemäss den Figuren 6 und 7 kann deshalb vorgesehen sein, zwischen dem Extruder 1 und dem Vakuumbandtrockner 10 ein Zuführtransportband 24 in einem evakuierten Rohr 23 vorzusehen, welches das extrudierte Gut auf eine höhere Ebene transportiert. In einer ersten Variante (Fig. 6) wird der Produktestrang aus dem Extruder auf das Zuführtransportband 22 abgelegt. Die Bandgeschwindigkeit entspricht dabei der Extrudiergeschwindigkeit. Auf seinem Weg zum Vakuumbandtrockner expandiert und trocknet das Gut soweit, dass es am Eingang des Vakuumbandtrockners 10 mit einer Granuliereinrichtung 25 granuliert werden kann. Die Verweilzeit im Vakuumbandtrockner 10 wird erheblich reduziert. Für rascher trocknende Güter kann gemäss Fig. 7 die Granuliereinrichtung 25 in der Bereits beschriebenen Weise direkt am Extruder 1 angeordnet sein. Mit dem Zuführtransportband 24 wird das Granulat dem Vakuumbandtrockner 10 zugeführt. Da bereits auf der Zuführstrecke 23, 24 die Trocknung im Vakuum und unter der Einwirkung Eigenwärme des Guts einsetzt, verkürzt sich die Verweilzeit im Vakuumbandtrockner 10 entsprechend. Anstelle des in Fig. 7 vorgesehenen Vakuumbandtrockners kann auch ein anderer Trocknertyp, wie z.B. ein Schaufel-, Spiral- oder Schneckentrockner eingesetzt werden, da das Granulat nach der Zuführstrecke an seiner Oberfläche ausreichend getrocknet und formstabil ist, dass es schüttgutartig weiterverarbeitbar ist.

In Fig. 8 schliesslich ist eine Vorrichtung gezeigt, bei welcher das Granulat aus dem Extruder in einen Vakuumtrockner gelangt, der nicht als Vakuumbandtrockner ausgebildet ist. Die Transportstrecke zur Ausschluesvorrichtung ist als Schneckenwelle 26 in einem Vakuumrohr 27 ausgestaltet. Anstelle der Schneckenwelle kann auch eine Spiralwelle oder eine Paddelwelle in der Art eines Schaufeltrockner vorgesehen sein. Das Rohr 27 kann in gewünschtem Steigwinkel zwischen 0 Grad (horizontal) und 90 Grad senkrecht angeordnet sein. Dank der raschen Oberflächentrockung unmittelbar nach dem Extrudieren bzw. Granulieren durch die Einwirkung von Eigenwärme und Vakuum kleben die Granulatteilchen nicht aneinander und können auf dem Transportweg, evtl. unter Einwirkung von äusserer Wärme, ganz getrocknet und dann ausgeschleust werden. Gegenüber der Verwendung eines Bandtrockner hat diese Ausführung den Vorteil, dass keine Verteilung des Guts auf einem Band notwendig ist, dass keine Bänder und keine Bandregulierung erforderlich ist, dass das Volumen des Trockners viel besser ausgenutzt werden kann, was zu einer leichteren Bauweise führt und dass schliesslich Abstreifer und Brecher am Band entfallen.

Wie sich aus den vorstehend erläuterten Ausführungsbeispielen ergibt, kann durch die erfindungsgemässen Massnahmen der Produktionsausstoss durch das Ausnutzen der latenten Wärme im Gut wesentlich erhöht werden. Während bisher die äussere Zufuhr von Wärme im Trockner lange Verweilzeiten erforderten, kann diese herabgesetzt werden. Ferner kann mit tieferen Temperaturen gearbeitet werden. Dies führt insbesondere bei Lebensmitteln zu einer Qualitätsverbesserung, indem sich jeglicher Brandgeschmack vermeiden lässt und die Löslichkeit des Fertigprodukts nicht durch hohe Temperaturenwirkung herabgesetzt wird. Die Förderung des Guts mittels einem Extruder lässt ferner einen von Anfang an geringeren Wasseranteil des Guts zu, was wiederum die Verweilzeit im Vakuum reduziert.

## Ansprüche

1. Verfahren zum kontinuierlichen Verarbeiten von pastösem Gut, dadurch gekennzeichnet, dass das Gut unter Erwärmung durch einen Extruder (1) in eine Unterdruckzone (10) gefördert wird, wobei es in der Unterdruckzone (10) unter Ausnutzung der im Extruder aufgebrachten Wärme mindestens teilweise verfestigt wird.

2. Verfahren nach Anspruch 1, dadurch gekennzeichnet, dass das Gut als Strang durch die Unterdruckzone (10) gefördert und nach geeigneter Verfestigung zerkleinert wird.

3. Verfahren nach Anspruch 1, dadurch gekennzeichnet, dass das Gut am Austritt des Extruders (1) in der Unterdruckzone (10) zerkleinert und in zerkleinerter Form durch die Unterdruckzone (10) gefördert wird.

4. Verfahren nach einem der vorangehenden Ansprüche, wobei das zu verarbeitende Gut einen Wasseranteil aufweist, dadurch gekennzeichnet, dass das Gut den minimalen, zur Extruderförderung ausreichenden Wasseranteil besitzt.

5. Verfahren nach einem der vorangehenden Ansprüche, dadurch gekennzeichnet, dass das Gut in der Unterdruckzone (10) zusätzlich beheizt wird.

6. Vorrichtung zur Durchführung des Verfahrens nach einem der vorangehenden Ansprüche, gekennzeichnet durch einen mit dem zu verarbeitenden Gut beaufschlagbaren Extruder (1), dessen Austrittdüse (2) mit einem unter Vakuum setzbaren Raum (10) verbunden ist, wobei im evakuierbaren Raum (10) Fördermittel (12;24;26) zur Förderung des extrudierten Guts vorgesehen sind.

7. Vorrichtung nach Anspruch 6, dadurch gekennzeichnet, dass der unter Vakuum setzbare Raum und die Fördermittel (12) durch einen Vakuumbandtrockner (10) gebildet sind.

8. Vorrichtung nach Anspruch 7, wobei der Vakuumbandtrockner (10) eine Gravitations-Trockengutausschleusvorrichtung (22) besitzt, dadurch gekennzeichnet, dass der Extruder (1) auf einem tieferen Niveau angeordnet ist, als der Vakuumbandtrockner (10), wobei zwischen dem Extruder und dem Vakuumbandtrockner ein den Niveauunterschied überwindender Förderkanal (23) vorgesehen ist, der eingangsseitig mit der Austrittsdüse (2) des Extruders (1) und ausgangsseitig mit dem Vakuumbandtrockner (10) verbunden und Teil des evakuierbaren Raums ist.

9. Vorrichtung nach einem der Ansprüche 6 bis 8, dadurch gekennzeichnet, dass die Austrittsdüse (2) des Extruders (1) im evakuierten Raum mit einer Zerkleinerungs- vorrichtung (16;21;25) verbunden ist, mittels welcher der extrudierte Strang zerkleinert wird, bevor er auf die Fördermittel gelangt.

10. Vorrichtung nach Anspruch 9, dadurch gekennzeichnet, dass die Zerkleinerungsvorrichtung (25) eine an die Austrittsdüse des Extruders anschliessende Expansionskammer (20) aufweist, welche ausgangseitig mit einem Schneidwerkzeug (21) zum Abtrennen von Strangstücken des expandierten Guts versehen ist.

11. Vorrichtung nach Anspruch 6, dadurch gekennzeichnet, dass die Austrittsdüse (2) des Extruders (1) im evakuierbaren Raum mit einer Zerkleinerungseinrichtung (16,25) verbunden ist, mittels welcher der extrudierte Strang nach der Extrusion zerkleinert wird, wobei das zerkleinerte Gut mittels in einem evakuierbaren Fördertunnel (27) angeordneten rotierenden Förderorgan (26) zu einer Trockengutausschleusvorrichtung (22) transportierbar ist.

12. Vorrichtung nach Anspruch 7, dadurch gekennzeichnet, dass die Austrittsdüse (2) des Extruders (1) mit einer Schwenkbeschichtungsvorrichtung (11) des Vakuumbandtrockners (10) verbunden ist, der den extrudierten Strang mäanderförmig auf dem Förderband (12) anordnet.

Fig.1

Fig.2

Fig.3

_Fig.4_

_Fig.5_

Fig.6

Fig.7

Fig.8

EP 0 406 650 A2